# EUROPEAN PATENT APPLICATION

(11) **EP 3 416 109 A1**
(43) Date of publication of application: **19.12.2018**
(21) Application number: 18177588.3
(22) Date of filing: 13.06.2018
(51) Int. Cl.: G06Q 10/02, G06Q 50/30, H04L 29/08, G06F 13/38

(54) **BAGGAGE MESSAGING HANDLING SYSTEM AND METHOD**

(30) Priority: 15.06.2017 FR 1755401; 15.06.2017 US 201715623578
(71) Applicant: Amadeus S.A.S., 06410 Biot (FR)
(72) Inventor: SALAMOUN, Gus, BOCA RATON, FL Florida FL33433 (US); WILLINGHAM, Matthew Parker, JACKSONVILLE, FL Florida FL32225 (US)
(74) Representative: Hnich-Gasri, Naïma

(57) **Abstract**

Embodiments relate to an access point for a baggage message handling system. The system comprises an input/output interface suitable for connecting to an external system, a converter configured to convert a message received via the input/output interface and/or a message to be transmitted via the input/output interface into a predetermined format, an extractor configured to extract metadata from a converted message and a transmit and/or receive unit configured to transmit and/or receive a further message comprising extracted metadata and associated address information.

## Description

### TECHNICAL FIELD

Embodiments relate to baggage messaging handling systems and methods, in particular to such systems and methods that can interface with external systems without need to modify such external systems.

### BACKGROUND

The aviation industry has enjoyed considerable growth over the last decades. With the growth in passenger numbers the number of pieces of baggage that need are transported has also increased considerably. Loss of baggage is costly, both in terms of the efforts expended in recovering the lost piece of baggage as well as in terms of reputational damage. A need for a reliable baggage tracking system therefore exists.

### SUMMARY

Embodiments of the invention relate to an access point for a baggage message handling system. The access point comprises an input/output interface suitable for connecting to an external system, a converter configured to convert a message received via the input/output interface and/or a message to be transmitted via the input/output interface into a predetermined format, an extractor configured to extract metadata from a converted message and a transmit and/or receive unit configured to transmit and/or receive a further message comprising extracted metadata and associated address information.

The adapter may be configured to access a database storing one or more communication protocols and to convert the message format based on said stored protocols.

The adapter may be configured to bind metadata received via the transmit/receive unit to a message that is to be sent via the input/output interface in accordance with a stored communication protocol.

The extractor may be a parser that emits and consumes events as a parse tree is traversed.

The access point may be further configured to create a message to be sent via the transmit/receive unit by combining extracted metadata with a unique transaction ID.

Embodiments of the invention also relate to a baggage message handling system comprising a plurality the above described of access points and one or more routers configured to route a message received through a transmit/receive unit of an access point based at least in part on content of metadata that forms part of the message.

The router may access routing rules and route the message based on the routing rules. The routing rules may link pieces of information included in the metadata to achieve routing at a finer level of granularity than would be possible based on single pieces of metadata only. The rules may, in particular, link pieces of metadata in a manner that is specific to a destination, such as a destination airport, to allow routing of the message to a sub-system or area of the destination.

Each router can be configured to route messages according to routing rules, the router being configured to dynamically compile said routing rules at or immediately prior to their use.

Embodiments of the invention also relate to a baggage message handling system comprising a plurality of the above described access points and distributed storage for storing messages received through the input/output interface of an access point as well as information indicating the routing state of associated messages transmitted through the transmit/receive unit of the access point.

The information may comprise a full routing history of the associated message.

Each router may be configured, upon re-start, to access the distributed storage and route messages for which associated routing states indicate that routing is incomplete.

The distributed storage can be accessible by a plurality of routers.

The baggage message handling system can be configured to associate one access point which each logical client that is to be communicated with.

The baggage message handling system may be configured to track the location of individual baggage items by tracking messages comprising metadata identifying the item and received from an access points with known locations.

Embodiments of the invention also relate to a method of communicating a message between a baggage message handling system and a system external to the baggage message handling system. The method comprises receiving a message from the external system via an input/output interface, converting the received message to a predetermined format, extracting metadata from the converted message and transmitting to the baggage handling message system a message comprising extracted metadata and associated address information.

Embodiments of the invention also relate to a computer program product comprising computer executable instructions that, when executed by a processor cause an access point for a baggage message handling system to accept via an input/output interface a message from an external system, convert the received message to a predetermined format, extract metadata from the converted message and transmit to the baggage handling message system a message comprising extracted metadata and associated address information.

### BRIEF DESCRIPTION OF THE DRAWINGS

Embodiments of the present invention will be understood and appreciated more fully from the following detailed description taken in conjunction with drawings in which:
Figure 1 shows a baggage message distribution system according to an embodiment;
Figure 2 shows the architecture of one embodiment of the baggage message distribution system at a high level;
Figure 3 provides an overview of the architecture of individual nodes according to an embodiment;
Figure 4 provides a more detailed view of the architecture of an individual node according to an embodiment;
Figure 5 shows the architecture of a gateway service according to one embodiment;
Figure 6 shows the flow of data within a router;
Figure 7 illustrates an example of message flow through the BMD system; and
Figure 8 shows details of the ways in which data are stored in the transaction journal.

### DETAILED DESCRIPTION

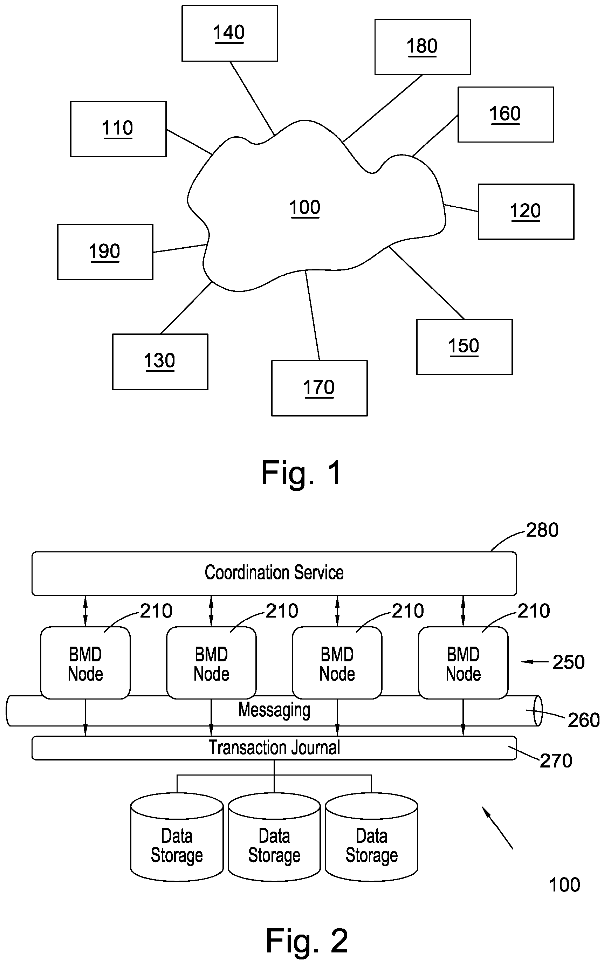

Figure 1 shows a baggage message distribution (BMD) system 100 according to an embodiment. The baggage message distribution system 100 facilitates effective communication between a variety of systems dealing with baggage messages. These systems include but are not limited to departure control systems 110 to 130, baggage sortation systems 140 to 160 and baggage reconciliation systems 170 to 190. The departure control systems 110 to 130 may be run by different airlines in a particular airport or in a number of airports or by a particular airline in a number of airports. The different baggage sortation systems 140 to 160 and baggage reconciliation systems 170 to 190 may be in operation in different airports. It will be appreciated that the above mentioned airports do not have to all be in one country, let alone in a particular country.

It will be appreciated that with increasing popularity in air traffic the number of pieces of baggage being transported every day is very large and steadily increasing. The amount of data relating to baggage transport that is constantly generated is therefore large. This fact alone renders the handling and distribution of baggage messages challenging.

Moreover, airline and airport data handling systems invariably use different methods and convention of data handling. As a consequence the exchange of messages between such systems tends not to be possible, let alone in a highly reliable fashion at high message volumes.

Figure 2 shows the architecture of one embodiment of the baggage message distribution system 100 at a high level. The system 100 comprises a plurality of nodes 210 that form a cluster 250 spanning the geographic area covered by the BMD system 100. In an embodiment each node is host to a set of services in the system. Every component in the system is considered a service, with 'service' simply referring to a (bundled) runtime unit that can be installed and run on any node in the cluster 250.

The nodes 210 are connected by a messaging system 260 to allow services to address each other between nodes. In one embodiment the messaging system used is *ActiveMQ.* In an embodiment the nodes 210 form a network of brokers, rendering each node 210 in the network implicitly visible from any other node 210 in the network. A transaction journal 270 comprises a set of tables that are used for tracking and journaling message flow and transaction status throughout the system. Each message from a node 210 is made available to at least one other node 210 so that node failure does not lead to loss of any messages.

As the BMD system 100 is a distributed system spanning any number of nodes a shared coordination service 280 coordinating the nodes 210 is provided. This service 280 will provide a cluster-wide context for each node 210 to allow the advertisement of services hosted by a node 210 as well as to announce a node's 210 ability or inability to participate in processing activities. The coordination service 280 is configured to facilitate the election of a leader amongst the nodes 210 in the cluster 250, to provide a registry of all of the services offered by the nodes 210 in the cluster 250, to monitor the status of the nodes 210 and the services they provide and to balance workloads within the cluster 250. In one embodiment the coordination service 280 is provided by machines different to those providing the BMD nodes 210. The coordination services themselves can be clustered, ensuring high availability and tolerance against failure of the coordination service 280.

Each individual component in the nodes 210 is deployed a configurable number of times on a configurable number of nodes across the cluster 250 without any hard dependencies to its host location. This allows new nodes to be added at runtime and provisioned dynamically. Dynamic deployment of the individual components allows rebalancing computational resources across the cluster during failover based on the addition or subtraction of active nodes.

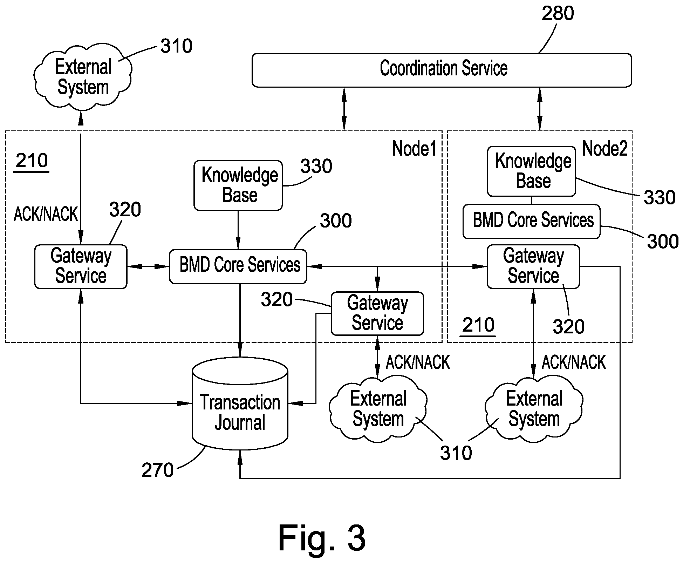

Figure 3 provides an overview of the architecture of individual nodes 210 according to an embodiment as well as of the manner in which the nodes 210 are in communicative connection with surrounding elements. A node 210 comprises an application server within which a set of BMD core services 300 are deployed. All communication with external systems 310 are handled by gateway services 320 responsible for protocol adaptation, session maintenance and all other domain specific behaviours. The external systems include but are not limited to the departure control systems 110 to 130, baggage sortation systems 140 to 160 and baggage reconciliation systems 170 to 190 shown in Figure 1.

Once a message has been received and appropriately processed by a gateway service 320 it will be handed off to the BMD core services 300 for appropriate routing and delivery. The core services 300 compute the delivery path of the message based on a set of pluggable routing rules stored in the knowledge base 330. These rules are, in the embodiment, dynamically compiled scripts and can, consequently, be modified during system runtime to adjust routing behaviour without incurring downtime. Once the appropriate routing paths are determined the coordination service 280 resolves the service addresses in the cluster for the intended recipient systems' gateway services 320.

While a copy of the knowledge base 330 is, in one embodiment, present in each node, in another embodiment the knowledge base may be stored in a form that can be accessed by each service in the cluster as required. As such only a single copy of the knowledge base needs to be stored, thereby saving storage space. Advantageously a number of copies are maintained for redundancy purposes. In one embodiment the copy or copies of the knowledge database are distributed throughout the cluster. The rules stored in the knowledge base can be updated during runtime. The knowledge base is configured to transmit notifications to the routers in the cluster of any updates to the rules, so that the routers operate using the most up to date rule set available.

All services, including the coordination service 280 are configured to register themselves with a service registry to announce their presence and availability in the system 100. The services can consequently be individually addressed across any node in the cluster. In one embodiment the router 300 is responsible for resolving the correct internal service addresses used during message delivery.

The services are also configured to reconfigure themselves on demand at runtime upon request from the coordination service to allow for load balancing etc. the service registry is maintained as part of the coordination service 280. As mentioned above, the coordination service 280, in one embodiment, forms a highly available secondary cluster separate from the BMD node set with a minimum of three nodes. An entry in the registry only persists while the service is active and running and expires at any time the service is shut down or faults. As the coordination service 280 is operated in a separate cluster the likelihood of it failing together with a node 210 running a failed service is very low. Each node 210 maintains an active connection to the coordinator service 280, which is in embodiments, run on a separate machine. These connections a create session alongside data objects that are bound to that session. The coordination service 280 monitors session. In the event that the node 210 goes offline and the session is lost the coordination service 280 can re-distribute actions associated with failed sessions to other nodes. Offline services can be rapidly detected in this manner, permitting easy auditing of cluster state, reacting to service lifecycle events and failures in an event-based manner.

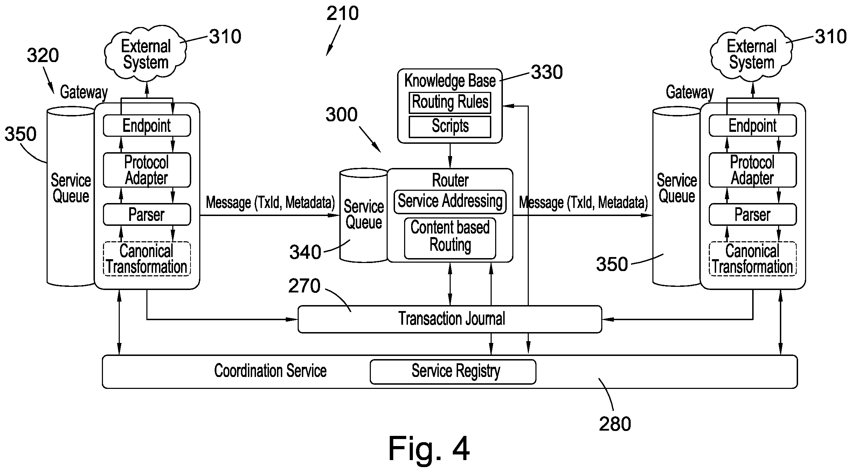

Figure 4 provides a more detailed view of the architecture of an individual node 210. Each of the BMD core service 300 and the gateways 320 include their own queue 340 and 350 respectively, which will be globally available across the cluster via the messaging system. In the event of the failure of a service messages which have started to be routed through the cluster but have not yet been delivered can be retrieved from a queue they inhabit when the service had failed and routing can be restarted. The system, in one embodiment, is equally configured to use queues of other services to buffer spike loads. In this manner peak traffic can be accommodated and processed smoothly over an operational period.

The gateways 320 receive messages from connected external systems 310 and convert these messages from the format in which they have been received into a format for exchange within the BMD 100. All of the thus re-formated messages are stored within the transaction journal 270. Storage in the transaction journal 270 allows rendering the queues 340 and 350 non-persistent. Non-persistent queues are preferred for performance reasons. Should some of the non-persistently queued messages be lost, then the queues 340 and 350 are re-populated on the basis of the transaction journal 270.

In one embodiment each node 210 contains a node agent. The node agent is responsible for monitoring the health of the machine on which the node 210 is running as well as of the JVM in which this node 210 is running. The node agent in particular monitors the level of CPU usage by the node's operating system and the memory capability of the JVM. The CPU usage and JVM memory capabilities of nodes running the same services are compared so that heavily and least heavily loaded nodes are identified. On this basis cluster wide knowledge of least-loaded nodes is obtained. The node agent is configured such that during heavy peaks traffic messages are automatically routed to the most appropriate node in the cluster at any given time to ensure optimal load distribution.

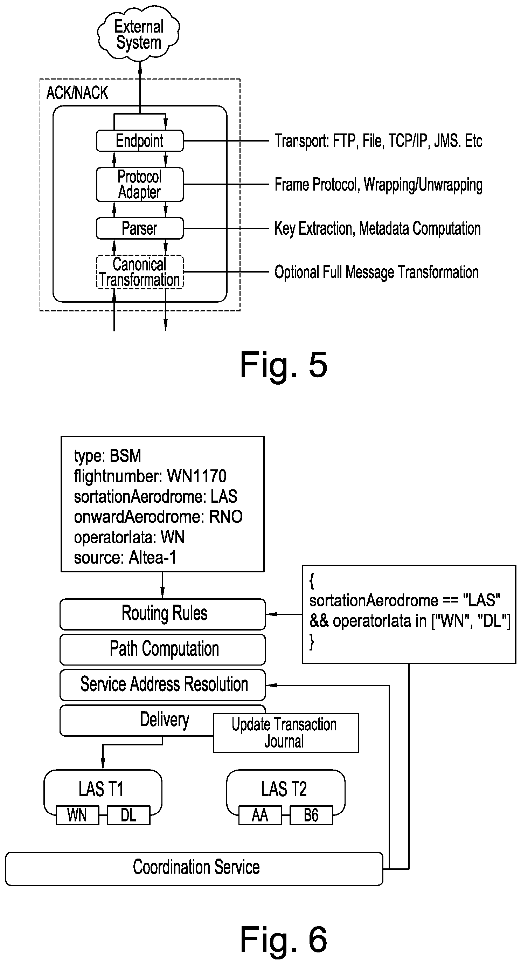

Figure 5 shows the architecture of a gateway service 320 according to one embodiment. A gateway 320 encapsulates all transport, protocol and session semantics required for communication with an external system. Gateway services 320 facilitate the accommodation of existing systems so that external systems that are to be connected to the BMD system 100 do not need to be modified. The endpoint 400 supports all interaction with the external system 310, supporting responsibilities such as TCP/IP frame decoding/encoding, heartbeat generation and authentication mechanisms. The gateway 320 is the effective boundary point for ingress into and egress out of the BMD 100. In one embodiment a single gateway 320 per logical external system 310 is deployed, creating a one to one mapping for gateway 320 to client.

The endpoint 400 is provided to allow communication with the external system 310 using communications methods such as but not limited to the following: TCP/IP, UDP, S/FTP/S, JMS, Web Services (SOAP/REST), etc. The endpoint 400 relies on pre-existing protocols for this nature but if configured to be able to store new and/or updated protocols to adapt to custom communication protocols that may be used by some external systems 310. In one embodiment the endpoint 400 is configured to use a string-based URI to allow node-wide property replacement. By defining a local IP address to which a service needs to be bound as one of the service's properties the service can be re-scheduled to run on a replacement node 210 if the node 210 on which it had originally run fails.

The gateway 320 moreover includes a protocol adaptor 410. The protocol adaptor 410 is responsible for the translation to/from a domain-specific data format. The endpoint 400 decouples this translation from the actual transport mechanism employed. The protocol adaptor 410 is configured to add and remove protocol envelopes and to transform from/to a known data format used by an external system. If a message is received at the gateway 320 this includes re-binding to the message appropriate metadata produced during the propagation of the message inside the BMD 100. Such metadata can be, for example, message sequence identifiers. The operation of the protocol adaptor 410 will be described in more detail below with reference to Figure 6.

The gateway 320 moreover includes a parser 420 that is configured to parse and validate arriving messages. Such messages may be IATA 1745 Baggage Messages, IATA Baggage XML messages or any other message type exchanged in the BMD 100. The parsing of Type-B messages is accomplished through the implementation of Extended Backus-Naur Form (EBNF) grammars which are used to generate parsers with the *ANTLR* framework. The generated parsers 420 provide an event-driven callback mechanism that behaves similarly to a SAX parser, with events being emitted and consumed as the parse tree is traversed. It will be appreciated that other parser technologies may be used in different embodiments.

During the parsing and validation process metadata is extracted from the message payload for use in downstream routing. The extracted metadata can include one or more of information regarding airports of involvement, flight numbers, airlines, LPC, TTY addresses, etc. If irregularities with the message format are detected that prevents proper routing these errors will be identified and marked by the parser for use in later message inspection and reporting. The parser 420 can extract metadata irrespective of the original format of the message.

Optionally the gateway 320 includes a canonical transformation means 430 to transform the metadata extracted by parser 420 into a unique namespace and schema for each type of data to be routed through the system. In one embodiment, for example, each IATA 1745 subtype (e.g. BSM, BPM or BTM) has its own namespace, e.g. com.amadeus.apt.bmd.bsm. The metadata schema is internal to the system described herein in one embodiment and is configured to identify all attributes and nested structures representing a type of data. The com.amadeus.apt.bmd.iata namespace may, for example, include individual schema for BSM, BTM, BPM, etc. This may be based on the IATA 1745 standard. A full identifier is therefore in one embodiment com.amadeus.apt.bmd.iata.bsm. It will be appreciated that the canonical transformation means 430 does not need to operate on messages received at the gateway 320 for output to the external system 310 as the message to be output to the external system 310 is re-assembled by the protocol adapter 410.

It is important to note that while a gateway 320 will be used for both inbound and outbound flows each will have separate processing concerns. An outbound flow, for example, will never require that parse or canonical transformation logic be applied. It is also possible for a single gateway to be comprised of many different routes and endpoints depending on the demands of the client system.

Figure 6 shows the flow of data within a router 300. The router can receive the metadata extracted from a message. Whilst the routing destination may partially identify the destination of the message, baggage handling messages presently tend not to allow unambiguous identification of individual destination locations. The destination provided may, for example, merely be the aerodrome to which the baggage is to be directed. However, no more accurate destination data may be available. Routing based on this destination data may at best be able to deliver the message to the correct geographical location. However, no more precise delivery is possible. To allow more precise routing, the routers are configured to inspect the metadata and make routing decision on the basis of it. To facilitate these decisions each router stores or is in communicative connection with a memory that stores in a separate physical location content-based routing rules configured to decide, based on the content of the message as encoded in the metadata and on information received from the coordination service, the path through which the message should be routed to reach a particular destination service. Such a destination service can be a destination gateway that is connected to a particular external system to which the internal message is to be delivered in the form of a bag message.

The content based routing rules can, for example, link various pieces of information included in the metadata in a manner that specifically reflects handling requirements in a particular airport. A message may, for example, be destined for a particular airport, wherein the metadata, however, fails to specify a particular part of the airport, say a particular terminal. At least if different terminals of the airport include separate physical or data infrastructure then delivery of the message to the incorrect terminal is undesirable. The content based routing rules link metadata entries to achieve routing at a finer level of granularity than is achievable based on a single piece of metadata only. A content based routing rule may, for example, define which terminal of a destination airport a message should be routed to, based on information of the carrier to which the message relates, based on an ultimate destination airport if the message relates to a stopover of a flight, etc.

Content based routing may therefore be defined as routing that combines a number of pieces of information within the metadata based on some information in the metadata to achieve a granularity of routing that is finer than the granularity of routing that would be achievable if only on piece of information of the metadata or only the piece of information of the metadata upon which the combination is based was used for routing.

Content based routing may, for example, be aerodrome based, for example defining routings based on airport of departure, various stopovers/transfer points, and final destination, airline-based, for example defining routings based on specific airline constraints, carrier vs. operator in preferred terminals, domestic vs. international flights based on trip number ranges, for example trip numbers from 0001-3000 operate in domestic terminal, but 4000+ operate in international terminal, LPC (Bag tag license plate)-based, for example defining routings based on the LPC prefix of a BSM, or the LPC itself if reverse routing of a BPM back to the producing system is performed, message type-based, for example defining routings based on internal datatype namespace (representing a BSM, Flight Record, etc.) to target specific systems based on datatype or any combination of these routing types. It will be appreciated that the routing examples provided here merely illustrate some of many ways of combining pieces of information of the metadata to improve the granularity of routing.

The information received from the coordination service can include one or more of the following:
- Information regarding the types and locations of services within the destination (in the example of Figure 6 the destination aerodrome)
- Information identifying the systems within the aerodrome belonging to carriers of interest
- Location information of equipment allocated to a particular flight within the destination aerodrome.

In one embodiment one or more or each node 210 in the system 100 maintains a configurable router pool, allowing for the parallel routing of messages from each connected system.

In one embodiment the routers 300 are configured to all updating of routing rules and service addresses in real-time. The coordination service is configured to broadcast the information necessary for such updated when needed and/or available. The need for updates can occur as a result of an event, such as the failure of a service or entire node, within the system 100. The entire update publishing mechanism may be event-based in this manner.

The routing rules conform to a format that can be compiled dynamically inside the router. In this manner the rules can be dynamically modified at runtime without the necessity of restarting or replacing components.

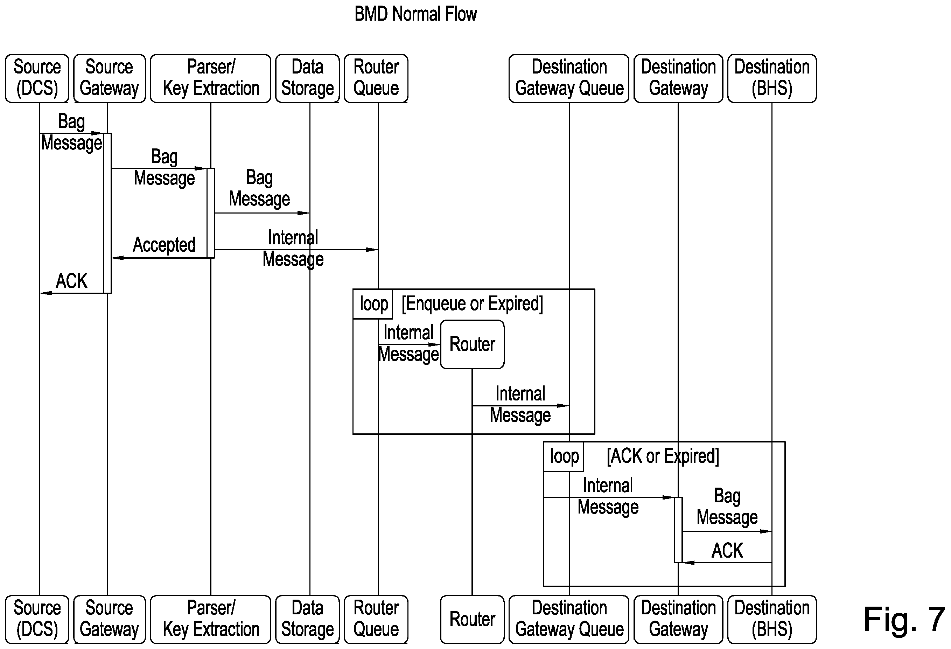

Figure 7 illustrates message flow through the BMD system 100. After an original message has been received at an incoming/source gateway 320 in step 500 it is handed to the parser 420 that forms part of the gateway 320 in step 510. The raw payload of the message is stored in the transaction journal 270 in step 520 and the parsed internal message is sent to the router for forwarding to its destination in step 530. Each message contains a unique transaction identifier, as well as the metadata about the payload of the message. As the transaction identifier can be used later to retrieve the full message payload from permanent storage a message passing through the routing and delivery portion of the system is an extremely lightweight representation of the full message data. Optionally, when necessary, the full originating payload may also be attached to the message. To facilitate retrieval of key data by client users as well as operational staff the message data stored includes, in one embodiment, an External System Identifier, a Message Identifier (LPC, etc.), the airline (DCS Provenance) concerned, the airport concerned, the delivery path, the delivery times, indications of errors and retry counts. It will be appreciated that this list in non-limiting and that other data may additionally be stored. The delivery path is determined by the original router and adhered to by all other routers.

Only once the message has been stored in the transaction journal and forwarded to the router flags the parser 420 the message as accepted to the incoming/source gateway 320 in step 540. The incoming/source gateway 320 in turn only acknowledges receipt of the message to the source in step 550 following receipt of the acceptance indication from the parser 420.

As discussed, each router 300 comprises a service queue 340. The internal message received at the router 300 from the parser 420 is stored in the router queue 340 for processing, retrieved in step 560 and routed by the router 300 in step 570 to the destination gateway queue 350. It will be appreciated that such routing may involve routing via a number of nodes 210.Whilst gateway services are provide, in an embodiment they are only used for communication with external systems. All services internal to a cluster can address each other directly without having to go through the gateway services. In one embodiment the routers 300 of two such nodes communicate via intervening gateway services 320. In another embodiment the nodes 210 and routers 300 within these nodes 210 are configured to allow direct communication between the routers 300.

Once the internal message has progressed within the queue of the destination gateway 320 it is retrieved by the destination gateway and converted into a bag message format that is known to be expected by the destination (a baggage handling system BHS in the case of Figure 6) in step 580, prior to delivery to the destination and acknowledgement of receipt by the destination in step 590.

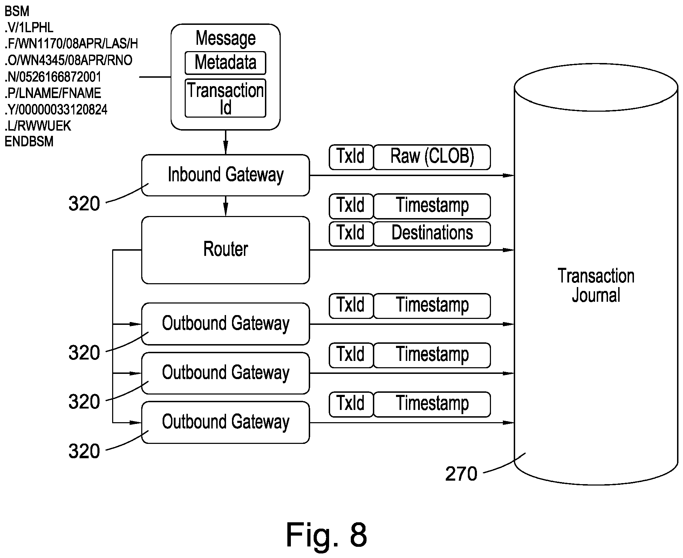

Figure 8 shows details of the ways in which data are stored in the transaction journal 270 as messages are routed from inbound 320 to outbound 320 gateway. After the original message has been received at the inbound gateway 320 its payload is stored in its raw form based on the receipt transport layer (i.e. prior to begin parsed) in the transaction journal 270 alongside a unique transmission ID for the message. As the (now modified) internal message progresses along its delivery route to the outbound gateway(s) 320, each routing node 300 stores a timestamp indicating that the process the node/component has been entrusted to perform has been performed. The inbound gateway also stores the destination address(es) associated with the transmission ID in the transaction journal 270. The timestamp is only stored after completion of the process to which it relates. It is consequently possible to determine whether or not a message has been processed by the inbound gateway 320 and whether or not routing has been completed. Should it be determined that a message in question has not arrived at the destination the internal message can be re-generated based on the raw data of the original message that had been stored in the transaction journal 270 by the inbound gateway 320. In case a router needs to recover following a disturbance, when the router comes back online any undelivered and valid messages in the transaction journal will be re-loaded for processing with a priority given to current messages. A transaction is, in one embodiment, a step of forwarding a message from one router to another. In an embodiment each transaction is assigned to a specific router. It is this router that will complete the transactions assigned to it following recovery. The system is configured to re-assign transactions to other routers, should a compromised router to which particular transactions are assigned fail to recover within a pre-set period of time.

The transaction journal more generally contains entries detailing the movement and current checkpoints of message flow through the BMD. This includes but is not limited to accepted, routed, delivered, acknowledged, expired, etc. states as well as the full raw inbound and outbound payloads. In this manner the system 100 is configured to fully reconstruct the lifecycle and traversal path of a message at any given time even after fault recovery. As mentioned above, the transaction journal is only ever updated upon a successful checkpoint being reached during message propagation. In the event of a recovery scenario the system 100 consequently has a guarantee that the message state is at least current or older than the last successful checkpoint attempt in the system. This prevents the loss of presumably delivered messages. The penalty incurred by this is at worst the duplication of a single message to a downstream system after recovery.

In one embodiment the transaction journal 270 takes the form of takes the form of a replicated commit log available to all nodes in the cluster through network attached storage. The journaled records have, in one embodiment, a low level and simple format. This enables the use of raw Java database connectivity (JDBC), reducing overheads. From the above it will be appreciated that no shared data access to any one record is necessary. The system 100 consequently avoids inter-transaction dependencies and achieves high parallel data throughput.

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described.

## Claims

1. An access point for a baggage message handling system comprising:
an input/output interface suitable for connecting to an external system;
a converter configured to convert a message received via the input/output interface and/or a message to be transmitted via the input/output interface into a predetermined format;
an extractor configured to extract metadata from a converted message; and
a transmit and/or receive unit configured to transmit and/or receive a further message comprising extracted metadata and associated address information.

2. An access point as claimed in claim 1, wherein it further comprises an adapter configured to access a database storing one or more communication protocols and to convert the message format based on said stored protocols.

3. An access point as claimed in claim 2, wherein said adapter is configured to bind metadata received via the transmit/receive unit to a message that is to be sent via the input/output interface in accordance with a stored communication protocol.

4. An access point as claimed in any preceding claim, wherein the extractor is a parser that emits and consumes events as a parse tree is traversed.

5. An access point as claimed in any preceding claim, wherein the access point is further configured to create a message to be sent via the transmit/receive unit by combining extracted metadata with a unique transaction identifier.

6. A baggage message handling system comprising a plurality of access points as claimed in any preceding claim and one or more routers configured to route a message received through a transmit/receive unit of an access point based at least in part on content of metadata that forms part of the message.

7. A baggage message handling system as claimed in claim 6, wherein each router is configured to route messages according to routing rules, the router being configured to dynamically compile said routing rules at or immediately prior to their use.

8. A baggage message handling system as claimed in claim 6 or 7, wherein the system comprises distributed storage for storing messages received through the input/output interface of an access point as well as information indicating a routing state of associated messages transmitted through the transmit/receive unit of the access point.

9. A baggage message handling system as claimed in Claim 8, wherein said information comprises a full routing history of the associated message.

10. A baggage message handling system as claimed in Claim 8 or 9, wherein each router is configured, upon re-start, to access the distributed storage and route messages for which associated routing states indicate that routing is incomplete.

11. A baggage message handling system as claimed in any of Claims 8 to 10, wherein said distributed storage is accessible by a plurality of routers.

12. A baggage message handling system as claimed in any of Claims 6 to 11, wherein the system is configured to associate one access point which each logical client that is to be communicated with.

13. A baggage message handling system as claimed in any of Claims 6 to 12, wherein it is configured to track the location of individual baggage items by tracking messages comprising metadata identifying the item and received from access points with known locations.

14. A method of communicating a message between a baggage message handling system and a system external to the baggage message handling system, the method comprising:
receiving a message from the external system via an input/output interface;
converting the received message to a predetermined format;
extracting metadata from the converted message; and
transmitting to the baggage handling message system a message comprising extracted metadata and associated address information.

15. A computer program product comprising computer executable instructions that, when executed by a processor cause an access point for a baggage message handling system to:
accept via an input/output interface a message from an external system;
convert the received message to a predetermined format;
extract metadata from the converted message; and
transmit to the baggage handling message system a message comprising extracted metadata and associated address information.
